# EUROPEAN PATENT APPLICATION

(11) **EP 1 400 964 A1**
(43) Date of publication of application: **24.03.2004**
(21) Application number: 02019778.6
(22) Date of filing: 04.09.2002
(51) Int. Cl.: G11B 7/26, G11B 7/0045

(54) **Method and device to produce an optical disk**

(71) Applicant: Sony DADC Austria AG, 5081 Anif (AT)
(72) Inventor: Reiter, Gottfried, c/o Sony DADC Austria AG, 5081 Anif (AT); Schuller, Josef, c/o Sony DADC Austria AG, 5081 Anif (AT); Holzapfel, Klaus, c/o Sony DADC Austria AG, 5081 Anif (AT); Kattner, Günther, c/o Sony DADC Austria AG, 5081 Anif (AT)
(74) Representative: Görz, Ingo

(57) **Abstract**

A method and device to produce a record carrier is proposed wherein a recording signal gets recorded by modulating an intensity of a writing laser beam which writes the recording signal onto the record carrier or a master to produce said record carrier, on basis of said recording signal and a track distortion signal that in particular indicates a track position distortion. In one embodiment the level of the track distortion signal is set such that high and low reflectivity areas which lie displaced from an ideal track position have an equal reading length to corresponding areas that are not displaced from the ideal track position. In another embodiment the track distortion signal is set such that the width of a wobbled groove is the same in areas that are displaced from the ideal track position as in areas that are not displaced.

## Description

The present invention relates to a method and a device to produce a record carrier for digital data, in particular to record carriers, i.e. storage media, which store digital data as an asynchronous signal, e.g. Compact Discs (CDs) and Digital Versatile Discs (DVDs) including all existing or future formats of CD and DVD as well as recordable or rewritable Storage Media or other Optical Storage Media which work according to a similar concept, e.g. CD-R, CD-RW, DVD-R, DVD+R, DVD-RW, DVD+RW, MO-media, ... . Further, the present invention relates to such a record carrier itself.

In particular, the method and the device to produce a record carrier for digital data according to the present invention relates to such record carriers that show a track distortion, e.g. a track displacement in reference to an ideal track, e.g. due to copy protection schemes or due to schemes to secure a better accessibility of copy protected record carriers, as e.g. described in the applicants parallel European patent application "Recording System for Optical Discs" which content is herewith incorporated by reference into this specification, or e.g. due to a groove that is recorded based on a wobble signal, or e.g. due to the wobble signal based on which e.g. the groove is recorded.

According to the applicants parallel European patent application "Recording System for Optical Discs" a tracking error that results from an increased Digital Sum Value (DSV) is reduced or compensated by a displacement of the track at a corresponding position, which alone would lead to a tracking error with opposite phase in respect to the tracking error that results from an increased DSV.

However, also such a displacement of the track might lead to a disturbed accessibility of the record carrier, e.g. to a higher or intolerable rate of reading errors.

Therefore, it is the object underlying the present invention to provide a further method and a device to produce a record carrier for digital data, as well as such a record carrier itself, which lead to a reduced rate of reading errors, in particular in connection with record carriers that show a track position distortion, e.g. a displacement of the track from an ideal position.

The method to produce a record carrier for digital data according to the present invention is defined in independent claim 1. Preferred embodiments thereof are defined in the dependent claims 2 to 9. A device to produce a record carrier according to the present invention is defined in independent claim 11. Preferred embodiments thereof are defined in the dependent claims 12 to 19. Record carriers according to the present invention are defined in independent claims 20 and 21. A computer program product according to the present invention is defined in claim 10.

The method to produce an optical record carrier according to the present invention comprises the step of:
- recording a recording signal by modulating an intensity of a writing laser beam, which writes the recording signal onto the record carrier or a master to produce said record carrier, on basis of said recording signal and a track distortion signal that in particular indicates a track position distortion.

The device to produce an optical record carrier according to the present invention comprises
- a recording unit for recording a recording signal by modulating the intensity of a writing laser beam that writes the recording signal onto the record carrier or a master to produce said record carrier on basis of said recording signal and a track distortion signal that in particular indicates a track position distortion.

The record carrier according to the present invention comprises
- high and low reflective areas of the recorded record carrier which lie displaced from an ideal track position that have an equal reading length to corresponding areas which do not lie displaced from the ideal track position, and/or
- a groove that shows the same width or volume in areas which lie displaced from an ideal track position and in areas which do not lie displaced from the ideal track position.

The recording of a recording signal under consideration of a track distortion signal that in particular indicates a displacement of the track from the normal position according to the present invention reduces a jitter on the optical record medium. This effect seems to take place, since in general the pickup of a reading device cannot follow these usually fast changes of the track position and therefore the track parts in the range of the track displacement lie outside the centre of the reading laser beam, which leads to the jitter effect that the low reflective areas, e.g. so called pits, will become shorter and the high reflective areas, e.g. so called lands, will become longer in respect to the corresponding areas lying in the centre of the reading beam laser. This difference in the lengths of the signals is called jitter and might lead to reading errors or problems that are compensated according to the present invention.

According to the present invention this jitter gets reduced or compensated to show values in the range of those generated without a displaced track, since the track distortion, in particular the track displacement, is considered during the recording or mastering of the record carrier. The track distortion signal might get level adapted so as to fit to those signals with which it will be processed in order to achieve the jitter reduction or compensation. The method and device according to the present invention can be combined with other methods and devices to improve the accessibility of record carriers.

The method according to the present invention preferably comprises the step of:
- superposing said recording signal and said track distortion signal or a signal derived therefrom to derive a signal for modulating the intensity of the writing laser beam.

The method according to the present invention further preferably comprises the step of:
- using an optical or optical-mechanical device to record said recording signal on basis of said signal for modulating the intensity of the writing laser beam, in particular an acousto-optical modulator.

The method according to the present invention still further preferably comprises the step of:
- rectifying said track distortion signal to generate said signal derived therefrom.

The method according to the present invention alternatively or additionally further preferably comprises the step of:
- setting the level of said track distortion signal to generate said signal derived therefrom so that high and low reflective areas of the recorded record carrier which lie displaced from an ideal track position and are generated under consideration of said track distortion signal will have an equal reading length to corresponding areas which do not lie displaced from the ideal track position.

In the method according to the present invention, said track distortion signal might be based on an emulated tracking error signal obtained based on a data stream to be recoded, and said data stream is the recording signal. This first preferred embodiment according to the present invention corresponds to an embodiment described in the applicants above referenced European patent application "Recording System for Optical Discs" which content is included herein by reference. In particular, according to this first preferred embodiment a jitter might be compensated during recording of the record carrier or a glass master to produce record carriers, which jitter results from a track displacement of the track from its normal or ideal position.

In the method according to the present invention, said track distortion signal might alternatively or additionally be based on an intensity of a wobble signal of the record carrier, in case said record carrier is a recordable record carrier, and a data stream to be recorded onto said record carrier is the recording signal. In particular, according to this second preferred embodiment of the present invention a jitter might be compensated that results from a track distortion due to a wobble signal on a recordable or rewritable optical record carrier, e.g. a CD-R or a DVD-R. During recording of a data stream onto such a recordable or rewritable optical record carrier the intensity of the writing laser beam gets adapted proportional to the intensity of the wobble signal at that position (which might be directly detected or extrapolated from earlier detections).

The method according to the present invention still further alternatively or additionally preferably comprises the step of:
- setting the level of said track distortion signal to generate said signal derived therefrom so that a groove of the record carrier generated under consideration of said track distortion signal shows the same width or volume in areas which lie displaced from an ideal track position and in areas which do not lie displaced from the ideal track position.

In the method according to the present invention, further alternatively or additionally preferably said track distortion signal might be based on a wobble signal that should be written on the record carrier, in case said record carrier is a recordable record carrier, and said recording signal is a groove recording signal, in particular logical one. This preferred embodiment of the present invention is in particular suited for the writing of timing information onto recordable or rewritable record carriers, i.e. a formatting of recordable or rewritable record carriers. In particular, according to this third preferred embodiment of the present invention a jitter might be compensated that results from a track distortion due to a wobble signal on a recordable optical record carrier, e.g. a CD-R or a DVD-R. During formatting of the record carrier or the glass master to produce record carriers, in particular during recording of the groove, the intensity of the writing laser beam gets adapted proportional to the level of the wobble frequency signal at that position which might be obtained from the disc formatter.

The computer program product according to the present invention comprises computer program means adapted to perform the method steps as defined above, or parts thereof, in particular the deriving and/or further processing of the track distortion signal, when being executed on a computer, digital signal processor, or the like.

The device according to the present invention preferably comprises
- a superposing unit for superposing said recording signal and said track distortion signal or a signal derived therefrom to derive a signal for modulating the intensity of the laser beam.

Said superposing unit is preferably a modulator unit driver.

The device according to the present invention alternatively or additionally preferably comprises
- an optical or optical-mechanical device to record said recording signal on basis of said signal for modulating the intensity of the laser beam, in particular an acousto-optical modulator.

The device according to the present invention further alternatively or additionally preferably comprises
- a rectifier for rectifying said track distrotion signal to generate said signal derived therefrom.

The device according to the present invention still further alternatively or additionally preferably comprises
- a level adaptation unit for adapting the level of said track distortion signal to generate said signal derived therefrom.

The device according to the present invention still further alternatively or additionally preferably comprises
- an emulator for emulating a tracking error signal or an inverse tracking error signal from a data stream that should be recorded to determine said track distortion signal on basis thereof.

The device according to the present invention still further alternatively or additionally preferably comprises
- an intensity determination unit for determining the intensity of a wobble signal of the record carrier as said track distortion signal, in case said record carrier is a recordable record carrier.

The device according to the present invention still further alternatively or additionally preferably comprises
- a disc formatter for supplying a wobble frequency signal that should be written on the record carrier as said track distortion signal, in case said record carrier is a recordable record carrier.

In the device according to the present invention the level of the track displacement signal or the rectified track displaced signal, which might e.g. be seen as signal derived therefrom, is preferably set as it is defined in the corresponding method steps.

The accompanying drawings, which are incorporated in and constitute a part of this specification, illustrate embodiments of the invention and, together with a general description of the invention given above, and the detailed description of the embodiment given below, serve to explain the principles of the invention, wherein:
- **Fig. 1**: illustrates a principle for producing a record carrier, in particular jitter reduction or compensation, according to a first preferred embodiment of the present invention,
- **Fig. 2**: shows a flowchart elucidating the method for producing a record carrier, in particular for the jitter reduction or compensation, according to the first preferred embodiment of the present invention,
- **Fig. 3**: shows a first preferred embodiment of a device according to the present invention,
- **Fig. 4**: shows a second preferred embodiment of a device according to the present invention, and
- **Fig. 5**: shows a third preferred embodiment of a device according to the present invention.

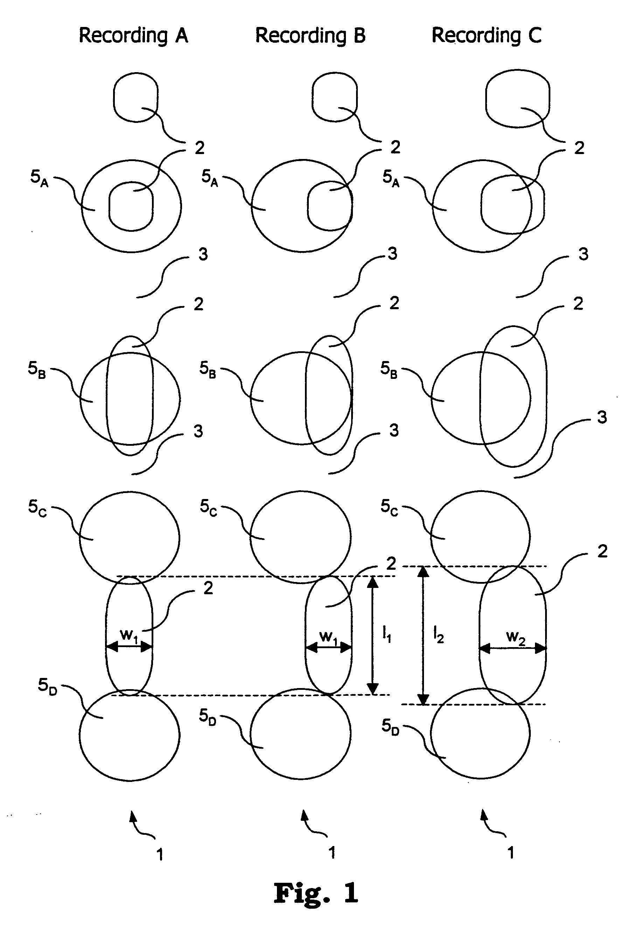

Fig. 1 shows a part of the track of a glass master 13 (or of a corresponding record carrier) according to the prior art and according to the present invention, in particular four areas corresponding to pits 2 (shown encircled) and between these three lands 3 of a data stream 1 for three different recordings. A first recording A shows a prior art recording with no track displacement, a second recording B shows the corresponding part with track displacement recorded according to the prior art, and a third recording C shows the corresponding part with track displacement recorded according to the present invention. Further, for each recording four positions of a reading beam 5 are shown and correspondingly referenced to as first position 5_{A}, second position 5_{B}, third position 5_{C}, and fourth position 5_{D}.

For the first recording A the reading beam 5 is in all four positions centred above the ideal track on which the pits 2 and lands 3 are arranged, i.e. the reflection of the reading beam 5 on a light sensor has a maximal possible efficiency.

For the second recording B the reading beam 5 is still in all four positions centred above the ideal track, but the pits 2 and lands 3 are arranged slightly displaced therefrom so that the overlap area of the reading beam 5 and the pits 2 is smaller, i.e. the reflection of the reading beam 5 on a light sensor is different in comparison to the recording A. In particular, in the third position 5_{C} and the fourth position 5_{D} there exists a respective small overlap of the reading beam and a pit 2 for the first recording A, but no overlap for the second recording B.

Also for the third recording C according to the present invention the reading beam 5 is still in all four positions centred above the ideal track. Also the pits 2 and lands 3 are arranged slightly displaced therefrom. However, the overlap area of the reading beam 5 and the pits 2 is similar to that of the first recording A, since the size of the pits 2 is increased in comparison to that of the first recording A and the second recording B, i.e. a comparable reflection of the reading beam 5 on a light sensor is achieved in relation to the recording A. The comparable reflection is set by appropriately selecting an increased size, i.e. width and/or length, of the pits 2, i.e. a second width w₂ and a second length l₂ of the shown displaced pits 2 of the third recording C is respectively appropriately selected to be bigger than a first width w₁ and a first length l₁ of the pits 2 according to the first recording A and second recording B as well as of (not shown) pits of the third recording C that are not displaced from the ideal track position. In particular, in the third position 5_{c} and the fourth position 5_{D} there exists a comparable small overlap for the first recording A and for the third recording C.

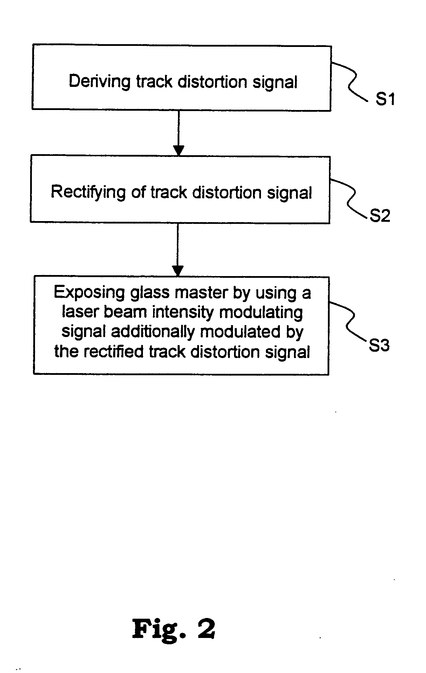

The basic principle underlying this preferred embodiment of the present invention will be described in connection with Fig. 2 in the following. Fig. 2 shows a flowchart illustrating the three basic method steps to implement a preferred embodiment of the present invention.

In a first step S1 the track distortion signal, in particular a track displacement signal, is derived, e.g. as described above, or in case it is available, e.g. generally during a mastering process, by using the same input signal that is supplied to a wobble unit of the mastering machine, e.g. from a disc formatter. Thereafter, in a second step S2 the track distortion signal gets rectified. Finally, in a third step S3 the glass master used to produce record carriers or the record carrier itself is exposed by using a laser beam intensity signal that is additionally modulated by the rectified and eventually also level adapted track distortion signal, i.e. the rectified and level adapted track distortion signal is used for the additional intensity modulation of the writing laser beam to record the recording signal, e.g. an EFM data stream.

As mentioned above, according to a first preferred embodiment of the present invention, as said track distortion signal for the writing of data onto a record carrier or a glass master that is used to produce record carriers, an emulated tracking error signal or an inverted emulated tracking error signal might be used, as it is described in the applicants above referenced parallel European patent application "Recording System for Optical Discs" which content is herewith included herein by reference.

Further, according to a second preferred embodiment of the present invention, as said track distortion signal for the writing of data onto recordable or rewritable record carriers, an intensity of a wobble signal of the record carrier might be used, in particular to reduce or compensate jitter generated due to the wobble signal or groove width variations on the recordable or rewritable record carrier.

Still further, according to a third preferred embodiment of the present invention, as said track displacement signal for the writing of format information onto a recordable or rewritable record carrier or a glass master that is used to produce such record carriers, the wobble signal that should be written on the record carrier or the glass master might be used, in particular to reduce or compensate groove width variations on the recordable or rewritable record carrier.

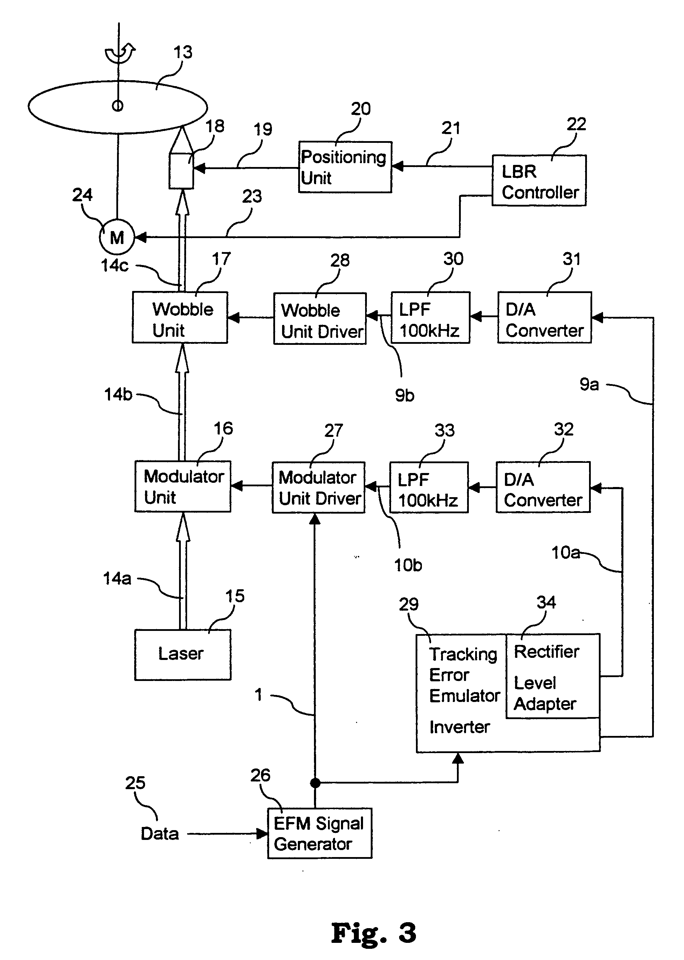

Fig. 3 shows the first preferred embodiment of a device to produce a record carrier, or - as preceding stage - a glass master based on which the record carrier is then produced. This embodiment is also described in the applicants parallel European patent application "Recording System for Optical Discs".

A glass master 13 gets exposed by a laser beam 14a emitted from a laser 15, guided through a modulator unit 16 to become an intensity modulated laser beam 14b, further guided through a wobble unit 17 to become a position defined intensity modulated laser beam 14c that is finally guided onto the glass master 13 by a laser head 18. Usually, the laser 15 and the modulator unit 16 are fixed mounted in a mastering machine for optical record carriers, e.g. normal, recordable or rewritable CDs and DVDs, and the wobble unit 17 and the laser head 18 are mounted on a moveable optical table. The moveable optical table receives a tracking signal 19 from a positioning unit 20, which tracking signal 19 is exemplary shown to be supplied to the laser head 18, since this laser head 18 in the end guides the writing laser beam onto the glass master 13. The positioning unit 20 receives a first control signal 21 from a laser beam recorder (LBR) controller 22 that also sends out a second control signal 23 to a spindle motor 24 that rotates the glass master 13.

In case on a CD recording, data 25 to be recorded is supplied to an EFM signal generator 26. Other types of recordings, e.g. a DVD recording, might use other types of signal generators. The EFM signal generator 26 generates the eight to fourteen modulated (EFM) data stream 1 based on which the laser beam 14a is modulated by the modulator unit 16 to become the intensity modulated laser beam 14b. Therefore, the EFM data stream 1 is supplied to a modulator unit driver 27 that drives the modulator unit 16.

As indicated before, the entity of wobble unit 17 and laser head 18, as well as positioning unit 20, and LBR controller 22 performs the above functionality to normally position the writing laser beam over a wanted track position and to have the possibility to displace the writing laser beam from that normal position based on a signal that is input to the wobble unit 17. This input is generally used for e.g. writing a groove based on a wobble signal onto CD or DVD recordables by supplying a wobble frequency signal to the wobble unit 17, usually through a wobble unit driver 28. The wobble unit 17 is usually not used for recording a glass master of a record carrier that is not recordable or rewritable.

According to the applicants parallel European patent application "Recording System for Optical Discs", the wobble unit 17 is used to displace the track for compensating such effects that e.g. result from a high DSV in the data stream 1. Therefore, the filtered inverted calculated or emulated tracking error signal 9b is supplied to the wobble unit 17 to compensate tracking errors that would result from the data stream 1. To achieve this, the data stream 1 is supplied to a tracking error emulator inverter 29 that calculates or emulates the inverted calculated or emulated tracking error signal 9a from the data stream 1. The inverted calculated or emulated tracking error signal 9a is supplied to a low-pass filter 30 with a cut-off frequency of 100 kHz via a digital/analog converter 31. The resulting inverted filtered calculated or emulated tracking error signal 9b is supplied as said "track displacement signal" to the wobble unit 17 via said wobble unit driver 28.

The processing order of the low-pass filter 30 and the inverter within the tracking error emulator 29 might be changed. It is also possible that the digital/analog converter 31 is not arranged between these both devices, but before or after these devices so that the inversion and / or the low-pass filtering will not be performed fully digitally or fully analog.

The displacement of the track from the normal position might introduce a jitter while reading a record carrier produced as indicated above. This effect takes place, since in general the optical pickup of the reading device cannot follow these usually fast changes of the track position and therefore the track parts in the range of the track displacement lie outside the centre of the reading laser beam, which leads to the jitter effect that the low reflective areas 2, e.g. so called pits, will become shorter and the high reflective areas 3, e.g. so called lands, will become longer in respect to the corresponding areas lying in the centre of the reading beam laser. This difference in the lengths of the signals is called jitter and might lead to reading errors or problems.

According to the first preferred embodiment of the present invention this jitter gets compensated. Therefore, basically the track displacement signal gets rectified and the laser beam gets additionally intensity modulated on basis of this rectified track displacement signal, e.g. the modulator unit driver 27 drives the modulator unit 16 on basis of the EFM data stream 1 and the track displacement signal, i.e. the concept of this jitter compensation is to use a track displacement signal for the additional control of the light intensity of the writing laser beam, i.e. additional to the normal light intensity control on basis of the signal to be recorded.

The absolute intensity of the additional modulation gets chosen so that high and low reflective areas of the recorded record carrier which lie displaced from an ideal track position will have an equal reading length to corresponding areas which do not lie displaced from the ideal track position. This equal reading length might be achieved by either actually adapting the length of the displaced lands and pits, and/or by varying their width so that no or no considerable deviation from the centre of the reading laser beam is achieved. By this additional modulation, the jitter can be reduced or compensated to normal values, i.e. as without track displacement.

This rectifying and level adapting is performed by a rectifier and level adapter 34 within the tracking error emulator inverter 29 that outputs an additional light intensity modulation signal 10a. Actually, the additional intensity modulation signal 10a gets digital to analog converted by a digital/analog converter 32 and low pass filtered e.g. by a low pass filter 33 with a cut-off frequency of 100kHz before being supplied as filtered additional intensity modulation signal 10b to the modulator unit driver 27 which then drives the modulator unit 16 on basis of the EFM data stream 1 and the filtered additional intensity modulation signal 10b.

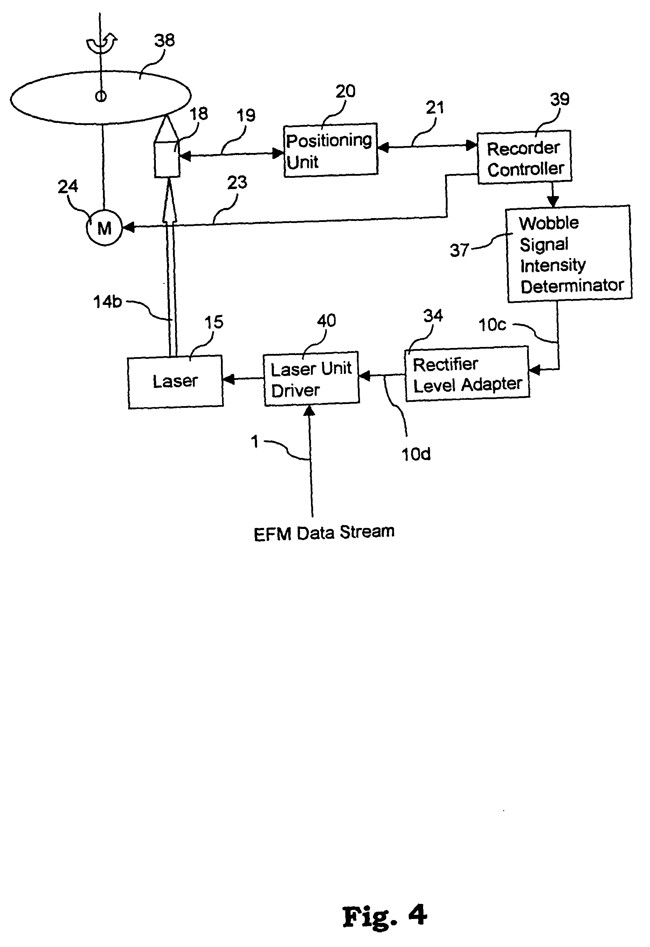

Fig. 4 shows the second preferred embodiment of a device to produce a record carrier according to the present invention, in particular a recordable or rewritable record carrier that is already formatted. In other words, the second preferred embodiment according to the present invention is applicable to CD or DVD recorders as installed e.g. in personal computers. As indicated above, according to this embodiment the track distortion signal is derived based on an evaluation of an intensity of the wobble signal available on a recordable or rewritable record carrier during the writing of said record carrier.

Although the parts and/or units within such a low cost CD or DVD recorder that relies on timing information that is pre-recorded on the record carrier, i.e. only formatted record carriers might be used, are of a different quality than those described above for a CD or DVD mastering machine, the basic functionality of the units and parts commonly shown in Fig. 3 and Fig. 4 is similar or equal. Therefore also the same reference signs are used.

A recordable record carrier 38 gets exposed by an intensity modulated laser beam 14b emitted from a laser 15 that is guided onto the recordable record carrier 38 by a laser head 18. Usually, the laser 15 and the laser head 18 are mounted on a moveable optical pickup of the recorder. The optical pickup is bi-directional coupled a positioning unit 20 to receives a tracking signal 19, which is exemplary shown to be supplied to the laser head 18, since this laser head 18 in the end guides the writing laser beam onto the recordable record carrier 38. The positioning unit 20 receives wobble signal information of the wobble signal that is recorded as format information on the recordable optical record carrier from the optical pickup, here shown to be received from the laser head 18. The positioning unit 20 is further bi-directional coupled to a recorder controller 39 to receive a first control signal 21 and to pass over the eventually pre-processed wobble signal information. The recorder controller 39 also sends out a second control signal 23 to a spindle motor 24 that rotates the recordable record carrier 38 and passes the eventually further pre-processed wobble signal information to a wobble signal intensity determinator 37. The first and second control signals sent out from the recorder controller 39 are usually based on the wobble signal information received by said recorder controller 39.

An EFM data stream 1 to be recorded is supplied to a laser unit driver 40 that drives the laser 15.

The entity of optical pickup as well as positioning unit 20 and recorder controller 39 performs the above functionality to normally position the writing laser beam over a wanted track position.

The pre-recorded format information, i.e. the wobble signal already recorded on the recordable or rewritable optical record carrier 38 might introduce a jitter into the recording signal, i.e. the recorded EFM data stream 1, while reading a recordable or rewritable record carrier produced as indicated above.

According to the second preferred embodiment of the present invention this jitter gets compensated. Therefore, basically a wobble intensity signal 10c output by the wobble signal intensity determinator 37 gets rectified and level adapted by a rectifier and level adapter 34 and the laser beam gets additionally intensity modulated on basis of this rectified and level adapted wobble intensity signal 10d, e.g. the laser unit driver 40 drives the laser 15 on basis of the EFM data stream 1 and the rectified and level adapted wobble intensity signal 10d, i.e. the concept of this jitter compensation is to use a wobble intensity signal for the additional control of the light intensity of the writing laser beam, i.e. additional to the normal light intensity control on basis of the signal to be recorded.

As in the first preferred embodiment according to the present invention, the absolute intensity of the additional modulation gets chosen by the rectifier and level adapter 34 so that high and low reflective areas of the recorded record carrier which lie displaced from an ideal track position due to the influence of the wobble signal or of groove width variations will have an equal reading length to corresponding areas which do not lie displaced from the ideal track position. This equal reading length might be achieved by either actually adapting the length of the displaced lands and pits, and/or by varying their width so that no or no considerable deviation from the centre of the reading laser beam is achieved. By this additional modulation, the jitter can be reduced or compensated to normal values, i.e. as without track displacement.

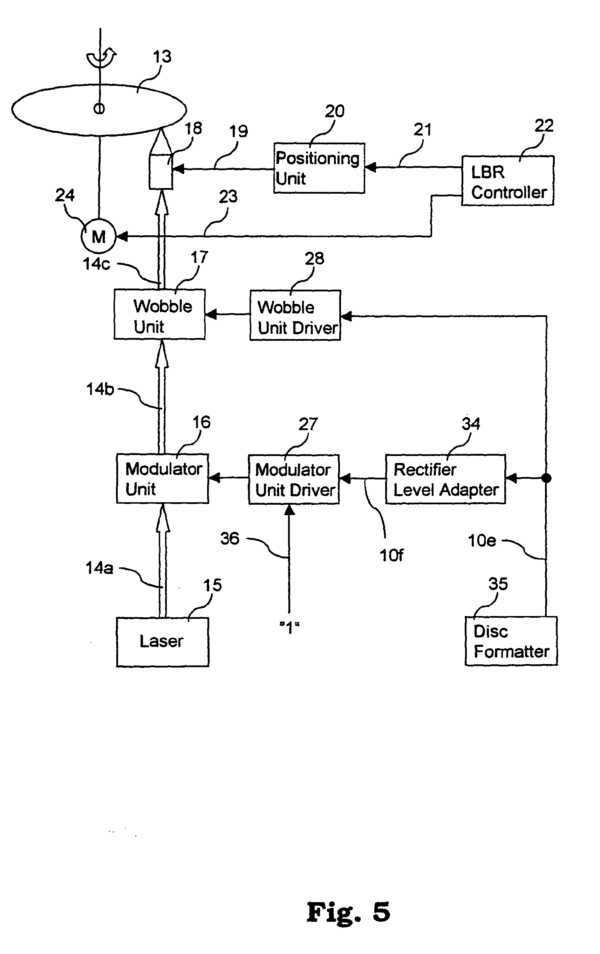

Fig. 5 shows the third preferred embodiment of a device to produce a record carrier according to the present invention, in particular to format a recordable or rewritable record carrier, or - as preceding stage - a glass master based on which the record carrier is then produced. In other words, the third preferred embodiment according to the present invention is a variation of the first preferred embodiment according to the present invention in which not a data signal is recorded, but format information, i.e. the groove with the wobble signal based on which later on data might be recorded as e.g. described above in connection with the second preferred embodiment.

The basic functionality of the units and parts commonly shown in Fig. 3 and Fig. 5 is similar or equal. Therefore also the same reference signs are used.

As in the first preferred embodiment according to the present invention, a glass master 13 gets exposed in a mastering machine for optical record carriers by a laser beam 14a emitted from a laser 15, guided through a modulator unit 16 to become an intensity modulated laser beam 14b, further guided through a wobble unit 17 to become a position defined intensity modulated laser beam 14c that is finally guided onto the glass master 13 by a laser head 18. The moveable optical table of the mastering machine receives a tracking signal 19 from a positioning unit 20, which tracking signal 19 is exemplary shown to be supplied to the laser head 18, since this laser head 18 in the end guides the writing laser beam onto the glass master 13. The positioning unit 20 receives a first control signal 21 from a laser beam recorder (LBR) controller 22 that also sends out a second control signal 23 to a spindle motor 24 that rotates the glass master 13.

A format signal 36 to be recorded, in particular for recording the groove e.g. a logical one so as to record a constant signal, based on which the laser beam 14a is modulated by the modulator unit 16 to become the intensity modulated laser beam 14b, is supplied to a modulator unit driver 27 that drives the modulator unit 16.

As indicated before, the entity of wobble unit 17 and laser head 18, as well as positioning unit 20, and LBR controller 22 performs the above functionality to normally position the writing laser beam over a wanted track position and to have the possibility to displace the writing laser beam from that normal position based on a signal that is input to the wobble unit 17. This input is generally used for e.g. writing a groove based on a wobble signal onto CD or DVD recordables by supplying a wobble frequency signal 10e to the wobble unit 17, usually through a wobble unit driver 28. The wobble unit driver 28 receives this wobble frequency signal 10e from a disc formatter 35.

The groove or wobble track might be narrowed in the areas in which it is displaced from the normal track position. This effect results from a not so good efficiency of the acousto-optical modulators and/or deflectors and/or other optical components in these areas of the deflection. Usually, the rule can be given that the more deflection is given, the less the efficiency is available. Therefore, the photo resist on the glass master 13 gets illuminated with a reduced light energy in these areas of the deflection.

Such a variation in the width of the wobble track might lead to a different volume of the data track, which might lead to problems during data recording of the recordable or rewritable optical record carrier, e.g. increased error rate or increased jitter.

According to the third preferred embodiment of the present invention these problems are compensated. Therefore, basically the wobble frequency signal 10e gets rectified and level adapted by a rectifier and level adapter 34 and the laser beam gets additionally intensity modulated on basis of this rectified and level adapted wobble frequency signal 10f, e.g. the modulator unit driver 27 drives the modulator unit 16 on basis of the format signal 36 and the rectified and level adapted wobble frequency signal 10f.

The absolute intensity of the additional modulation gets chosen so that the groove shows the same or volume width in areas with and without deflection.

The method and device according to the present invention, according to its preferred embodiments can advantageously be combined, also with other methods and devices to achieve an improved readability of record carriers, e.g. the EFM.

## Claims

1. Method to produce an optical record carrier, **characterized by** the step of:
- recording a recording signal (1, 36) by modulating an intensity of a writing laser beam (14a, 14b), which writes the recording signal (1, 36) onto the record carrier (38) or a master (13) to produce said record carrier, on basis of said recording signal (1, 36) and a track distortion signal (10a, 10c, 10e) that in particular indicates a track position distortion.

2. Method according to claim 1, **characterized by** the step of:
- superposing said recording signal (1, 36) and said track distortion signal (10a, 10c, 10e) or a signal derived therefrom (10b, 10d, 10f) to derive a signal for modulating the intensity of the writing laser beam ( 14a, 14b).

3. Method according to claim 2, **characterized by** the step of:
- using an optical or optical-mechanical device (16) to record said recording signal (1, 36) on basis of said signal for modulating the intensity of the writing laser beam (14a, 14b), in particular an acousto-optical modulator.

4. Method according to claim 2 or 3, **characterized by** the step of:
- rectifying said track distortion signal (10a, 10c, 10e) to generate said signal (10b, 10d, 10f) derived therefrom.

5. Method according to anyone of claims 2 to 4, **characterized by** the step of:
- setting the level of said track distortion signal (10a, 10c) to generate said signal (10b, 10d) derived therefrom so that high and low reflective areas of the recorded record carrier which lie displaced from an ideal track position and are generated under consideration of said track distortion signal (10a, 10c) will have an equal reading length to corresponding areas which do not lie displaced from the ideal track position.

6. Method according to anyone of claims 1 to 5, **characterized in that** said track distortion signal is based on an emulated tracking error signal (10a) obtained based on a data stream (1) to be recoded, and said data stream (1) is the recording signal.

7. Method according to anyone of claims 1 to 6, **characterized in that** said track distortion signal is based on an intensity of a wobble signal (10c) of the record carrier (38), in case said record carrier is a recordable record carrier, and a data stream (1) to be recorded onto said record carrier (38) is the recording signal.

8. Method according to anyone of claims 1 to 7, **characterized by** the step of:
- setting the level of said track distortion signal (10e) to generate said signal (10f) derived therefrom so that a groove of the record carrier generated under consideration of said track distortion signal (10e) shows the same width or volume in areas which lie displaced from an ideal track position and in areas which do not lie displaced from the ideal track position.

9. Method according to anyone of claims 1 to 8, **characterized in that** said track distortion signal is based on a wobble signal (10e) that should be written on the record carrier, in case said record carrier is a recordable record carrier, and said recording signal is a groove recording signal, in particular logical one.

10. Computer program product, comprising computer program means adapted to perform the method steps as defined in anyone of claims 1 to 9, or parts thereof, in particular the deriving and/or further processing of the track distortion signal, when being executed on a computer, digital signal processor, or the like.

11. Device to produce an optical record carrier, **characterized by**
- a recording unit for recording a recording signal (1, 36) by modulating the intensity of a writing laser beam (14a, 14b) that writes the recording signal (1, 36) onto the record carrier (38) or a master (13) to produce said record carrier on basis of said recording signal (1, 36) and a track distortion signal (10a, 10c, 10e) that in particular indicates a track position distortion.

12. Device according to claim 11, **characterized by**
- a superposing unit (27) for superposing said recording signal (1, 36) and said track distortion signal (10a, 10c, 10e) or a signal (10b, 10d, 10f) derived therefrom to derive a signal for modulating the intensity of the laser beam (14a, 14b).

13. Device according to claim 12, **characterized in that**
- said superposing unit (27) is a modulator unit driver.

14. Device according to claim 12 or 13, **characterized by**
- an optical or optical-mechanical device (16) to record said recording signal (1, 36) on basis of said signal for modulating the intensity of the laser beam (14a), in particular an acousto-optical modulator.

15. Device according to anyone of claims 11 to 14, **characterized by**
- a rectifier (34) for rectifying said track distortion (10a, 10c, 10e) signal to generate said signal (10b, 10d, 10f) derived therefrom.

16. Device according to anyone of claims 11 to 16, **characterized by**
- a level adaptation unit (34) for adapting the level of said track distortion signal (10a, 10c, 10e) to generate said signal (10b, 10d, 10f) derived therefrom.

17. Device according to anyone of claims 11 to 16, **characterized by**
- an emulator (29) for emulating a tracking error signal or an inverse tracking error signal from a data stream (1) that should be recorded to determine said track distortion signal (10a) on basis thereof.

18. Device according to anyone of claims 11 to 17, **characterized by**
- an intensity determination unit (37) for determining the intensity of a wobble signal of the record carrier (38) as said track distortion signal (10c), in case said record carrier is a recordable record carrier.

19. Device according to anyone of claims 1 to 8, **characterized by**
- a disc formatter (35) for supplying a wobble frequency signal (10e) that should be written on the record carrier as said track distortion signal, in case said record carrier is a recordable record carrier.

20. Record carrier, **characterized by** high and low reflective areas of the recorded record carrier which lie displaced from an ideal track position that have an equal reading length to corresponding areas which do not lie displaced from the ideal track position.

21. Record carrier, **characterized by** a groove that shows the same width or volume in areas which lie displaced from an ideal track position and in areas which do not lie displaced from the ideal track position.
